# FASCICULE DE BREVET EUROPEEN

(11) **EP 2 274 205 B1**
(45) Date de publication et mention de la délivrance du brevet: **01.02.2012**
(21) Numéro de dépôt: 09746004.2
(22) Date de dépôt: 28.04.2009
(51) Int. Cl.: B64D 33/02, F02C 7/045

(54) **PANNEAU D'ATTENUATION D'ONDES INTERCALE ENTRE UNE MOTORISATION ET UNE ENTREE D'AIR D'UNE NACELLE D'AERONEF**
ZWISCHEN DEM MOTOR UND DEM LUFTEINLASS EINER FLUGZEUGGONDEL BEFINDLICHE WELLENABSCHWÄCHUNGSARMATUR
WAVE ATTENUATION PANEL INSERTED BETWEEN THE MOTOR AND AIR INLET OF AN AIRCRAFT NACELLE

(30) Priorité: 30.04.2008 FR 0852945
(43) Date de publication de la demande: 19.01.2011
(73) Titulaire: Airbus Opérations SAS, 31060 Toulouse (FR)
(72) Inventeur: PORTE, Alain, F-31770 Colomiers (FR); LALANE, Jacques, F-31650 Saint Orens De Gameville (FR)
(74) Mandataire: Fantin, Laurent
(86) Numéro de dépôt international: PCT/FR2009/050781
(87) Numéro de publication internationale: WO 2009/138685

(56) Documents cités:
- EP-A- 0 898 063
- FR-A- 2 347 539

## Description

La présente invention se rapporte à un panneau d'atténuation d'ondes intercalé entre une motorisation et une entrée d'air d'une nacelle d'aéronef.

Un ensemble propulsif d'aéronef comprend une nacelle dans laquelle est disposée de manière sensiblement concentrique une motorisation reliée par l'intermédiaire d'un mât au reste de l'aéronef.

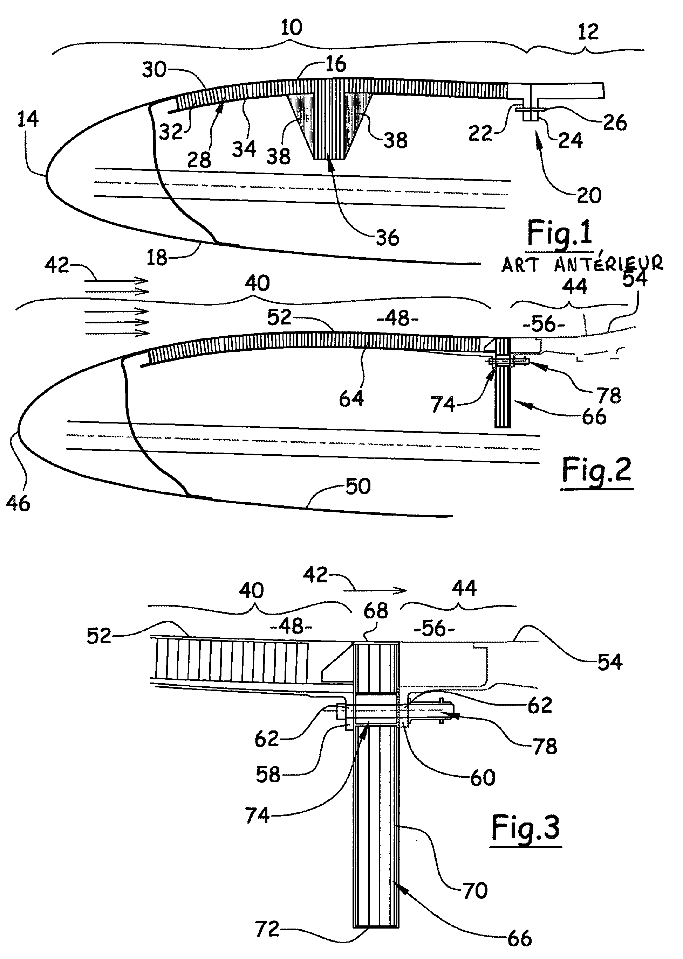

Comme illustré sur la figure 1, la nacelle comprend à l'avant une entrée d'air 10 permettant de canaliser un flux d'air dans une motorisation 12, une première partie du flux d'air entrant, appelée flux primaire, traversant la motorisation pour participer à la combustion, la seconde partie du flux d'air, appelée flux secondaire, étant entrainée par une soufflante et s'écoulant dans un conduit annulaire délimité par la paroi intérieure de la nacelle et la paroi extérieure de la motorisation.

L'entrée d'air 12 comprend une lèvre 14 dont la surface en contact avec les flux aérodynamiques est prolongée à l'intérieur de la nacelle par un conduit intérieur 16 de sections sensiblement circulaires et à l'extérieur de la nacelle par une paroi extérieure 18 de sections sensiblement circulaires.

L'entrée d'air 12 est reliée à la motorisation par des moyens de liaison 20 de type bride comprenant d'une part au niveau de l'extrémité du conduit intérieur 16 une collerette annulaire 22 offrant une première surface d'appui, et d'autre part, au niveau de la motorisation une collerette annulaire 24 offrant une seconde surface d'appui susceptible de prendre appui contre la première, des boulons 26, des rivets ou analogue étant répartis sur la circonférence des collerettes 22 et 24 pour les maintenir plaquées l'une contre l'autre et assurer ainsi la liaison entre l'entrée d'air et la motorisation.

Des techniques développées pour réduire le bruit émis par un aéronef, et notamment le bruit émis par les ensembles propulsifs, consiste à placer au niveau notamment de la paroi du conduit intérieur 16, un revêtement 28 visant à absorber une partie de l'énergie sonore, notamment en utilisant le principe des résonateurs d'Helmholtz. Afin d'optimiser le traitement acoustique, ce revêtement 28 doit s'étendre sur la surface la plus importante et s'étend généralement depuis la collerette 22 jusqu'à la lèvre 14.

De manière connue, un revêtement pour le traitement acoustique 28, également appelé panneau d'atténuation acoustique, comprend de l'extérieur vers l'intérieur une couche poreuse acoustiquement résistive 30, au moins une structure alvéolaire 32 et une couche réflectrice ou imperméable 34.

La couche acoustiquement résistive est une structure poreuse ayant un rôle dissipatif, transformant partiellement l'énergie acoustique de l'onde sonore la traversant en chaleur. Elle comprend des zones dites ouvertes susceptibles de laisser passer les ondes acoustiques et d'autres dites fermées ou pleines ne laissant pas passer les ondes sonores mais destinées à assurer la résistance mécanique de ladite couche. Cette couche acoustiquement résistive se caractérise notamment par un taux de surface ouverte qui varie essentiellement en fonction du moteur, des composants constituant ladite couche.

Selon une autre contrainte, dans certains cas de vol, le flux d'air entrant dans la nacelle et devant alimenter la motorisation présente une forte distorsion de pression et de vitesse susceptible de générer un effet de pompage dans la motorisation. Les pales de la motorisation s'animent alors d'un mouvement oscillant selon l'axe longitudinal de la nacelle qui génère une onde qui se propage dans le conduit intérieur 16 en augmentant d'intensité jusqu'à la rupture d'une ou plusieurs pales.

Une première solution pour pallier à cet effet consiste à augmenter la résistance mécanique des pales afin de limiter ce mouvement oscillant. Toutefois, cette solution n'est pas satisfaisante car elle conduit à augmenter la masse des pales et donc la masse embarquée.

Une autre solution consiste à prévoir un panneau d'atténuation d'ondes 36, comportant, comme le panneau d'atténuation acoustique de l'extérieur vers l'intérieur, une couche perméable à certaines ondes, au moins une structure alvéolaire et une couche réflectrice ou imperméable. Ainsi, ce panneau est destiné à absorber à son passage la ou les onde(s) produite(s) par l'effet de pompage de la motorisation et à limiter sa propagation. Selon un mode de réalisation, ce panneau 36 s'étend sur la circonférence du conduit intérieur 16, en lieu et place d'une partie du panneau d'atténuation acoustique 28.

Les caractéristiques de ce panneau d'atténuation d'ondes sont déterminées en fonction de l'onde à atténuer.

A cet effet, ce panneau d'atténuation d'ondes 36 a une épaisseur (selon la direction radiale) plus importante que celle d'un panneau d'atténuation acoustique 28, de l'ordre de 3 fois supérieure, et a une largeur (selon la direction longitudinale) qui varie en fonction de la position dudit panneau dans le conduit intérieur 16. Ainsi, plus le panneau d'atténuation d'ondes 36 est proche de la lèvre 14 plus sa largeur est importante, et inversement, plus il est proche de la motorisation plus sa largeur est faible.

Par conséquent, on tend à placer ce panneau d'atténuation d'ondes 36 à proximité de la motorisation afin d'en réduire les dimensions et donc la masse.

Même si elle limite les risques de rupture des pales, la présence de ce panneau d'atténuation d'ondes 36 n'est pas sans conséquence.

Ainsi, cette présence tend à réduire la superficie du revêtement 28 pour le traitement acoustique et donc à réduire les performances dudit traitement.

De plus, il est nécessaire de prévoir des renforts 38 de part et d'autre du panneau 36 sur toute sa circonférence afin de le maintenir ce qui contribue à augmenter la masse embarquée.

Le document FR2347539 montre un autre exemple d'entrée d'air avec un panneau d'atténuation d'ondes et est gardé comme l'art antérieur le plus proche.

Aussi, la présente invention vise à pallier les inconvénients de l'art antérieur en proposant une nacelle incorporant un panneau d'atténuation d'ondes limitant la masse embarquée et n'altérant pas les performances du traitement acoustique.

A cet effet, l'invention a pour objet une nacelle d'aéronef comportant une entrée d'air permettant de canaliser un flux d'air en direction d'une motorisation, ladite entrée d'air comportant un conduit intérieur formant une surface aérodynamique en contact avec le flux d'air prolongée vers l'arrière par une surface aérodynamique d'un conduit de la motorisation, ladite nacelle comportant un panneau d'atténuation d'ondes visant à limiter ou empêcher la propagation d'au moins une onde produite lors du pompage de la motorisation et comprenant une couche en contact avec le flux d'air susceptible de laisser passer ladite au moins une onde dont on cherche à limiter ou empêcher la propagation, au moins une structure alvéolaire et une couche réflectrice ou imperméable, caractérisée en ce que ledit panneau d'atténuation d'ondes est intercalé entre l'entrée d'air et la motorisation et sa couche en contact avec le flux d'air assure la continuité des surfaces aérodynamiques disposées en aval et en amont et en ce que ledit panneau d'atténuation d'ondes comprend des inserts intercalés entre l'entrée d'air et la motorisation pour reprendre les efforts de compression entre l'entrée d'air et la motorisation et ne pas écraser ledit panneau d'atténuation d'ondes.

D'autres caractéristiques et avantages ressortiront de la description qui va suivre de l'invention, description donnée à titre d'exemple uniquement, en regard des dessins annexés sur lesquels :
- la figure 1 est une coupe selon un plan radial d'une partie de l'avant d'une nacelle d'aéronef selon l'art antérieur,
- la figure 2 est une coupe selon un plan radial d'une partie de l'avant d'une nacelle d'aéronef selon l'invention,
- la figure 3 est une coupe selon un plan radial illustrant en détails un panneau d'atténuation d'ondes intercalé entre une entrée d'air et une motorisation d'une nacelle d'aéronef,
- la figure 4 est une vue en perspective d'un insert d'un panneau d'atténuation d'ondes et des moyens de liaison,
- les figures 5A à 5C sont des vues en perspective illustrant différentes variantes d'un insert d'un panneau d'atténuation d'ondes selon l'invention, et,
- les figures 6A à 6C sont des coupes selon un plan transversal illustrant différentes variantes d'un panneau d'atténuation d'ondes selon l'invention.

Sur la figure 1, on a représenté une partie de l'avant d'une nacelle d'un aéronef comprenant en 40 une entrée d'air permettant de canaliser un flux d'air 42 en direction d'une motorisation 44.

Pour la suite de la description, on entend par direction longitudinale, une direction parallèle à l'axe longitudinal de la motorisation et par direction radiale une direction perpendiculaire à l'axe longitudinal. On entend par plan transversal un plan perpendiculaire à la direction longitudinale et par plan radial un plan contenant l'axe longitudinal perpendiculaire à un plan transversal.

L'entrée d'air 40 comprend une lèvre 46 dont la surface en contact avec le flux d'air 42 entrant est prolongée à l'intérieur de la nacelle par un conduit intérieur 48 de sections sensiblement circulaires et à l'extérieur de la nacelle par une paroi extérieure 50 de sections sensiblement circulaires.

Le conduit intérieur 48 comprend une surface aérodynamique 52 en contact avec le flux d'air 42 qui se prolonge vers l'arrière de la nacelle par une surface aérodynamique 54 d'un conduit 56 de la motorisation.

Le conduit intérieur 48 de l'entrée d'air comprend à l'arrière un chant en forme d'anneau en regard d'un chant en forme d'anneau du conduit 56 de la motorisation.

Selon un mode de réalisation illustré en détails sur la figure 3, le conduit intérieur 48 comprend une collerette annulaire 58 comportant une première surface d'appui formant le chant arrière dudit conduit intérieur 48. En vis-à-vis, le conduit 56 de la motorisation comprend une collerette annulaire 60 comportant une seconde surface d'appui formant le chant avant dudit conduit 56 sensiblement parallèle à la première surface d'appui.

Les collerettes 58 et 60 comprennent des orifices 62 susceptibles de permettre le passage de tiges, disposés en vis-à-vis, espacés et répartis sur la circonférence des collerettes.

Avantageusement, le conduit intérieur 48 comprend un revêtement pour le traitement acoustique 64, également appelé panneau d'atténuation acoustique, comportant de l'extérieur vers l'intérieur une couche poreuse acoustiquement résistive, au moins une structure alvéolaire et une couche réflectrice ou imperméable, la couche acoustiquement résistive formant la surface aérodynamique 52.

La motorisation, l'entrée d'air ainsi que le panneau d'atténuation acoustique ne sont pas plus détaillés car ils sont connus de l'homme du métier.

Selon l'invention, la nacelle comprend un panneau d'atténuation d'ondes 66 visant à limiter ou empêcher la propagation d'au moins une onde produite lors du pompage de la motorisation susceptible d'endommager les pales de la soufflante de la motorisation.

Ce panneau d'atténuation d'ondes 66 comprend une couche 68 en contact avec le flux d'air 42 susceptible de laisser passer ladite au moins une onde dont on cherche à limiter ou empêcher la propagation, au moins une structure alvéolaire 70 et une couche réflectrice ou imperméable 72. On pourrait envisager plusieurs structures alvéolaires empilées, séparées par une couche susceptible de laisser passer des ondes.

Ce panneau d'atténuation d'ondes 66 s'étend sur au moins une partie de la circonférence de la nacelle et de préférence sur toute la circonférence. Il peut être réalisé en une ou plusieurs parties.

Les caractéristiques de la couche 68, notamment le taux de surface ouverte, et de la ou des structure(s) alvéolaire(s) sont ajustées en fonction de la ou des onde(s) dont on cherche à limiter ou empêcher la propagation. Selon un mode de réalisation, le panneau d'atténuation d'ondes 66 a une épaisseur au moins égale à 3 fois celle du panneau acoustique 64 de l'entrée d'air.

Selon une caractéristique importante de l'invention, le panneau d'atténuation d'ondes 66 est intercalé entre l'entrée d'air et la motorisation et sa couche 68 forme une surface aérodynamique susceptible d'assurer la continuité des surfaces aérodynamiques 52 et 54 disposées en aval et en amont selon le sens d'écoulement du flux d'air 42. En complément, il comprend des inserts 74, appelés également entretoises, intercalés entre l'entrée d'air et la motorisation afin de reprendre notamment les efforts de compression entre l'entrée d'air et la motorisation pour ne pas écraser ledit panneau d'atténuation d'ondes 66.

Cet agencement permet de réduire la largeur du panneau d'atténuation d'ondes dans la mesure où il est disposé le plus près possible de la motorisation. De plus, compte tenu de sa position, il n'interfère pas avec le traitement d'atténuation acoustique et ne réduit pas les performances dudit traitement. Enfin, les inserts 74 assurent le passage des flux d'efforts entre l'entrée d'air et la motorisation.

Les inserts 74 sont disposés dans des orifices traversants du panneau d'atténuation d'ondes dont les formes sont ajustées à celles des inserts 74 pour immobiliser lesdits inserts par rapport au panneau 66.

Avantageusement, les inserts 74 comprennent un trou 76 traversant permettant le passage de moyens de liaison 78 sous forme d'une tige susceptible d'assurer la liaison entre l'entrée d'air et la motorisation.

Cet agencement permet d'obtenir un maintien simple et efficace du panneau d'atténuation d'ondes en limitant la masse embarquée supplémentaire, les moyens 78 assurant la liaison entre l'entrée d'air et la motorisation mais également entre le panneau d'atténuation d'ondes et le reste de la nacelle.

Selon les variantes, les moyens de liaison 78 se présentent sous la forme de boulons, de rivets ou analogue comprenant une tige avec de part et d'autre deux butées susceptibles de plaquer l'entrée d'air et la motorisation l'une vers l'autre, et de maintenir le panneau d'atténuation d'ondes 66.

Les inserts 74 sont espacés et de préférence répartis sur la circonférence de la nacelle et disposés au droit des orifices 62.

Selon une autre caractéristique, les formes des inserts 74 sont déterminées de manière à augmenter le moment d'inertie desdits inserts dans un plan radial. Ce type de profil permet de reprendre les éventuels moments et de limiter l'impact des inserts sur le traitement des ondes, la plus grande dimension étant disposée selon une direction radiale afin que les inserts interfèrent avec un nombre limité de cellules de la structure alvéolaire 70.

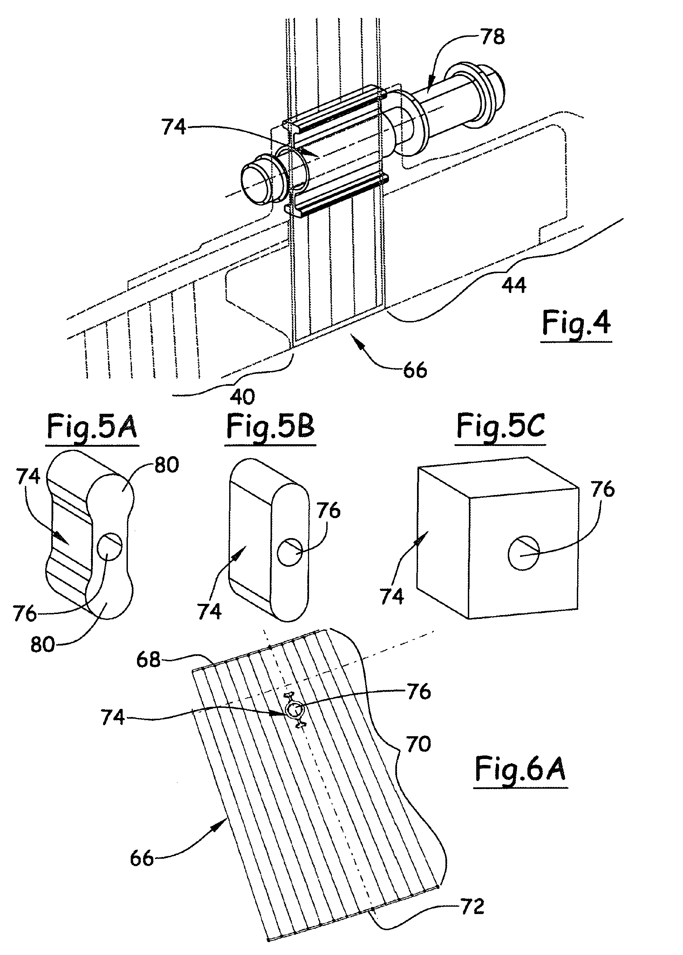

Selon les variantes, l'insert 74 peut avoir une section constante selon la direction longitudinale et avoir une section prismatique (carrée ou rectangulaire) comme illustrée sur la figure 5C, une section oblongue, comme illustré sur la figure 5B, avec la plus grande dimension orientée selon une direction radiale ou une section allongée avec deux lobes 80 disposés de manière symétrique par rapport au trou 76 selon la direction radiale comme illustré sur la figure 5A.

Selon un autre mode de réalisation illustré sur la figure 4, l'insert 74 comprend une section avec une partie centrale sous forme d'un cylindre avec un alésage cylindrique 76 ainsi que deux formes en T disposées de manière symétrique, le pied des T étant relié à la partie centrale.

La forme de l'insert est déterminée en fonction des contraintes structurales. Selon une première variante, les cellules de la structure alvéolaire 70 sont délimitées par des parois sensiblement parallèles entre elles, comme illustré sur la figure 6A.

En variante, les formes des cellules de la structure alvéolaire 70 peuvent être ajustées de manière à réduire l'impact des inserts sur le traitement des ondes.

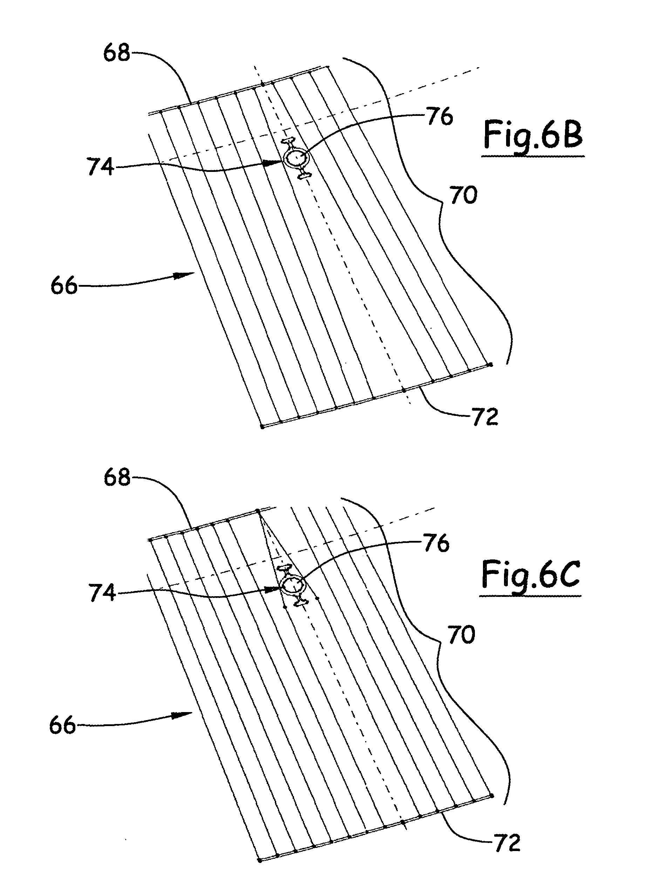

Selon des variantes illustrées sur les figures 6B et 6C, les parois des cellules de la structure alvéolaire interférant avec les inserts ont des formes évasées de manière à réduire la taille de la section des cellules interférant avec l'insert au niveau de la couche 68.

Selon un mode de réalisation illustré sur la figure 6B, la variation de la section de la cellule interférant avec un insert 74 est progressive depuis la couche perméable aux ondes 68 jusqu'à la couche imperméable 72.

Selon un autre mode de réalisation illustré sur la figure 6C, la cellule interférant avec un insert peut avoir une section qui varie sur une certaine épaisseur depuis une section réduite ou nulle au niveau de la couche perméable aux ondes 68 jusqu'à une section permettant de loger l'insert et conserver cette section constante jusqu'à la couche imperméable 72.

## Revendications

1. Nacelle d'aéronef comportant une entrée d'air (40) permettant de canaliser un flux d'air (42) en direction d'une motorisation (44), ladite entrée d'air (40) comportant un conduit intérieur (48) formant une surface aérodynamique (52) en contact avec le flux d'air (42) prolongée vers l'arrière par une surface aérodynamique (54) d'un conduit (56) de la motorisation, ladite nacelle comportant un panneau d'atténuation d'ondes (66) visant à limiter ou empêcher la propagation d'au moins une onde produite lors du pompage de la motorisation et comprenant une couche (68) en contact avec le flux d'air (42) susceptible de laisser passer ladite au moins une onde dont on cherche à limiter ou empêcher la propagation, au moins une structure alvéolaire (70) et une couche réflectrice ou imperméable (72), ledit panneau d'atténuation d'ondes (66) étant intercalé entre l'entrée d'air (40) et la motorisation (44) et ladite couche (68) en contact avec le flux d'air (42) assurant la continuité des surfaces aérodynamiques (52, 54) disposées en aval et en amont, **caractérisée en ce que** ledit panneau d'atténuation d'ondes comprend des inserts (74) intercalés entre l'entrée d'air et la motorisation pour reprendre les efforts de compression entre l'entrée d'air et la motorisation et ne pas écraser ledit panneau d'atténuation d'ondes (66).

2. Nacelle d'aéronef selon la revendication 1, **caractérisée en ce que** les inserts (74) comprennent un trou (76) traversant permettant le passage de moyens de liaison (78) susceptibles d'assurer la liaison entre l'entrée d'air et la motorisation.

3. Nacelle d'aéronef selon la revendication 1 ou 2, caractérisée en ce les inserts (74) sont disposés dans des orifices traversant du panneau d'atténuation d'ondes dont les formes sont ajustées à celles des inserts (74) pour immobiliser lesdits inserts par rapport au panneau d'atténuation d'ondes (66).

4. Nacelle d'aéronef selon l'une quelconque des revendications précédentes **caractérisée en ce que** les inserts (74) ont une forme permettant d'augmenter le moment d'inertie desdits inserts selon un plan radial.

5. Nacelle d'aéronef selon la revendication 4, **caractérisée en ce que** les inserts (74) ont une section constante oblongue avec deux lobes (80) disposés de manière symétrique.

6. Nacelle d'aéronef selon la revendication 4, **caractérisée en ce que** les inserts (74) ont une section constante avec une partie centrale sous forme d'un cylindre avec un trou cylindrique (76) ainsi que deux formes en T disposées de manière symétrique, le pied des T étant relié à la partie centrale.

7. Nacelle d'aéronef selon l'une quelconque des revendications précédentes, **caractérisée en ce que** les parois des cellules de la structure alvéolaire interférant avec les inserts (74) ont des formes évasées de manière à réduire la taille de la section desdites cellules au niveau de la couche (68) en contact avec le f lux d'air.

8. Nacelle d'aéronef selon la revendication 7, **caractérisée en ce que** la variation de la section de la cellule interférant avec un insert (74) est progressive depuis la couche (68) en contact avec le flux d'air (42) jusqu'à la couche imperméable (72).

9. Nacelle d'aéronef selon la revendication 7, **caractérisée en ce que** les cellules interférant avec un insert ont une section qui varie sur une certaine épaisseur depuis une section réduite ou nulle au niveau de la couche (68) en contact avec le flux d'air (42) jusqu'à une section permettant de loger l'insert et conservent cette section constante jusqu'à la couche imperméable (72).

## Claims

1. Aircraft nacelle that comprises an air intake (40) that makes it possible to channel an air flow (42) in the direction of a power plant (44), whereby said air intake (40) comprises an inside pipe (48) that forms an aerodynamic surface (52) that is in contact with the air flow (42) that is extended toward the rear by an aerodynamic surface (54) of a pipe (56) of the power plant, whereby said nacelle comprises a wave attenuation panel (66) whose purpose is to limit or prevent the propagation of at least one wave that is produced during the pumping of the power plant and comprises a layer (68) that is in contact with the air flow (42) that can allow to pass said at least one wave, the propagation of which an attempt is made to limit or prevent, at least one alveolar structure (70), and a reflective or impermeable layer (72), said wave attenuation panel (66) being inserted between the air intake (40) and the power plant (44), and said layer (68) that is in contact with the air flow (42) ensuring the continuity of the aerodynamic surfaces (52, 54) that are arranged downstream and upstream, **characterized in that** said wave attenuation panel comprises inserts (74) that can be inserted between the air intake and the power plant so as not to crush said wave attenuation panel (66).

2. Aircraft nacelle according to Claim 1, wherein the inserts (74) comprise a through hole (76) that allows the passage of connecting means (78) that can ensure the connection between the air intake and the power plant.

3. Aircraft nacelle according to Claim 1 or 2, wherein the inserts (74) are arranged in openings that pass through the wave attenuation panel of which the shapes are adjusted to those of the inserts (74) to immobilize said inserts relative to the wave attenuation panel (66).

4. Aircraft nacelle according to any of the preceding claims, wherein the inserts (74) have a shape that makes it possible to increase the moment of inertia of said inserts along a radial plane.

5. Aircraft nacelle according to Claim 4, wherein the inserts (74) have a constant oblong cross-section with two lobes (80) that are arranged symmetrically.

6. Aircraft nacelle according to Claim 4, wherein the inserts (74) have a constant cross-section with a central part in the form of a cylinder with a cylindrical hole (76) as well as two T shapes that are arranged symmetrically, the foot of the T being connected to the central part.

7. Aircraft nacelle according to any of the preceding claims, wherein the walls of the cells of the alveolar structure that interfere with the inserts (74) have tapered shapes so as to reduce the size of the cross-section of said cells at the layer (68) that is in contact with the air flow.

8. Aircraft nacelle according to Claim 7, wherein the variation of the cross-section of the cell that interferes with an insert (74) is gradual from the layer (68) that is in contact with the air flow (42) up to the impermeable layer (72)_{.}

9. Aircraft nacelle according to Claim 7, wherein the cells that interfere with an insert have a cross-section that varies over a certain thickness from a reduced or zero cross-section at the layer (68) that is in contact with the air flow (42) up to a cross-section that makes it possible to house the insert, and said cells preserve this constant cross-section up to the impermeable layer (72).

## Patentansprüche

1. Gondel eines Flugzeugs, umfassend einen Lufteinlass (40), der ermöglicht, einen Luftstrom (42) in Richtung einer Motorisierung (44) zu leiten, wobei der Lufteinlass (40) einen Innenkanal (48) umfasst, der eine mit dem Luftstrom (42) in Kontakt befindliche aerodynamische Fläche (52) ausbildet, die nach hinten durch eine aerodynamische Fläche (54) eines Kanals (56) der Motorisierung fortgesetzt ist, wobei die Gondel ein Paneel zur Wellendämpfung (66) umfasst, dessen Ziel es ist, die Fortpflanzung wenigstens einer während des Pumpens der Motorisierung erzeugten Welle zu begrenzen oder zu verhindern, und dass eine mit dem Luftstrom (42) in Kontakt befindliche Schicht (68), die geeignet ist, die wenigstens eine Welle, deren Fortpflanzung begrenzt oder verhindert werden soll, passieren zu lassen, wenigstens eine Wabenstruktur (70) sowie eine reflektierende oder undurchlässige Schicht (72) umfasst, wobei das Paneel zur Wellendämpfung (66) zwischen dem Lufteinlass (40) und der Motorisierung (44) eingefügt ist und die mit dem Luftstrom (42) in Kontakt befindliche Schicht (68) den stetigen Verlauf der nach- und vorgeordneten aerodynamischen Flächen (52, 54) sicherstellt, **dadurch gekennzeichnet, dass** das Paneel zur Wellendämpfung Einsätze (74) umfasst, die zwischen dem Lufteinlass und der Motorisierung eingefügt sind, um die Kompressionskräfte zwischen dem Lufteinlass und der Motorisierung aufzunehmen und um das Paneel zur Wellendämpfung (66) nicht zusammenzudrücken.

2. Gondel eines Flugzeugs nach Anspruch 1, **dadurch gekennzeichnet, dass** die Einsätze (74) ein durchgehendes Loch (76) aufweisen, das den Durchtritt von Verbindungsmitteln (78) ermöglicht, die geeignet sind, die Verbindung zwischen dem Lufteinlass und der Motorisierung sicherzustellen.

3. Gondel eines Flugzeugs nach Anspruch 1 oder 2, **dadurch gekennzeichnet, dass** die Einsätze (74) in durchgehenden Öffnungen des Paneels zur Wellendämpfung angeordnet sind, deren Formen denjenigen der Einsätze (74) angepasst sind, um die Einsätze gegenüber dem Paneel zur Wellendämpfung (66) festzulegen.

4. Gondel eines Flugzeugs nach einem der vorstehenden Ansprüche, **dadurch gekennzeichnet, dass** die Einsätze (74) eine Form aufweisen, die ermöglicht, das Trägheitsmoment der Einsätze in einer Radialebene zu erhöhen.

5. Gondel eines Flugzeugs nach Anspruch 4, dadurch gekenntzeichnet, dass die Einsätze (74) einen konstanten länglichen Querschnitt mit zwei symmetrisch angeordneten Ausbuchtungen (80) aufweisen.

6. Gondel eines Flugzeugs nach Anspruch 4, **dadurch gekennzeichnet, dass** die Einsätze (74) einen konstanten Querschnitt mit einem Mittelteil in Form eines Zylinders mit einem zylindrischen Loch (76) sowie zwei symmetrisch angeordnete T-Formen aufweisen, wobei der Fuß der Ts mit dem Mittelteil verbunden ist.

7. Gondel eines Flugzeugs nach einem der vorstehenden Ansprüche, **dadurch gekennzeichnet, dass** die Wände der Zellen der Wabenstruktur, die mit den Einsätzen (74) in Berührung kommen, erweiterte Formen aufweisen, derart, dass die Größe des Querschnitts der Zellen im Bereich der mit dem Luftstrom in Kontakt befindlichen Schicht (68) reduziert wird.

8. Gondel eines Flugzeugs nach Anspruch 7, **dadurch gekennzeichnet, dass** die Änderung des Querschnitts der Zelle, die mit einem Einsatz (74) in Berührung kommt, von der mit dem Luftstrom (42) in Kontakt befindlichen Schicht (68) bis zu der undurchlässigen Schicht (72) zunehmend ist.

9. Gondel eines Flugzeugs nach Anspruch 7, **dadurch gekennzeichnet, dass** die mit einem Einsatz in Berührung kommenden Zellen einen Querschnitt aufweisen, der über eine gewisse Dicke von einem reduzierten Querschnitt oder einem Querschnitt gleich null im Bereich der mit dem Luftstrom (42) in Kontakt befindlichen Schicht (68) bis zu einem Querschnitt, der die Aufnahme des Einsatzes ermöglicht, variiert, und diesen konstanten Querschnitt bis zu der undurchlässigen Schicht (72) behalten.
